(19) **Europäisches Patentamt / European Patent Office / Office européen des brevets**

(11) **EP 2 273 175 B1**

(12) **EUROPEAN PATENT SPECIFICATION**

(45) Date of publication and mention
of the grant of the patent:
**14.03.2012 Bulletin 2012/11**

(21) Application number: **10159566.8**

(22) Date of filing: **09.04.2010**

(51) Int Cl.:
*F16L 27/073* (2006.01)  *F16L 25/00* (2006.01)
*F16L 13/14* (2006.01)

(54) **Sealing joint for connecting adjoining duct pieces in an engine exhaust system**

Dichtungsverbindung zum Anschließen von Rohrteilen in einem Motorabgassystem

Joint d'étanchéité pour raccorder des pièces contiguës de tuyau dans un système d'échappement de moteur

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **08.07.2009 US 499423**
**13.08.2009 US 233511 P**
**13.08.2009 US 233670 P**
**30.03.2010 US 750293**
**17.07.2009 EP 09165847**

(43) Date of publication of application:
**12.01.2011 Bulletin 2011/02**

(60) Divisional application:
**12151070.5**

(73) Proprietor: **Parker-Hannifin Corporation**
**Cleveland, Ohio 44124-4141 (US)**

(72) Inventors:
• **More, Dominick**
  **Middletown, CT 06457 (US)**
• **Payne, Jeremy**
  **New Haven, CT 06515 (US)**
• **Cornett, Kenneth W**
  **Ivoryton, CT 06442 (US)**
• **Dudzinski, Paul A**
  **East Berlin, CT 06023 (US)**

(74) Representative: **Belcher, Simon James**
**Urquhart-Dykes & Lord LLP**
**Tower North Central**
**Merrion Way**
**Leeds LS2 8PA (GB)**

(56) References cited:
**US-A- 3 689 114    US-A- 5 772 254**
**US-A- 6 109 662    US-A1- 2008 017 269**

**Description**

This invention relates to a sealing joint, especially for connecting adjoining duct pieces in an engine exhaust system, and to ductwork comprising connected duct pieces and an engine exhaust system which includes such ductwork.

An engine exhaust system typically comprises ductwork with a plurality of duct pieces that are connected together to form conveyance passages for exhaust gasses. For example, a duct piece can be fixed to the exhaust manifold head (and aligned with one or more exhaust ports) and connected to other duct pieces to convey exhaust gas to a vehicle's outlet pipe. If the engine includes an EGR (*i.e.*, exhaust gas recirculation) design, duct pieces can be interconnected to convey exhaust gas back into the air intake line for reintroduction into the combustion chamber. Such a multi-piece construction of the ductwork allows the engine exhaust system to accommodate the thermal expansion-contraction that occurs during engine warm-up, operation, and/or cool-down.

Diesel engine manufacturers conventionally use piston ring type seals in exhaust system applications. The piston ring seals allow for significant relative motion and movement for the exhaust manifold components to thermally expand. However, piston rings are not continuous seals. Piston rings have a cut in them to allow flexibility in the hoop direction. This gap provides a leak path for exhaust gas to leak out of the exhaust system. This leaked exhaust bypasses the catalytic converter, exhaust gas recirculation, and/or particle collection components. As exhaust emissions get tighter and tighter, these small exhaust leaks need to be prevented and all exhaust gas needs to be collected and treated through the exhaust system.

Improved sealing effectiveness of exhaust components and sub-components is required to meet Euro VI emission standards scheduled to take effect in January 2013. A sealing joint is provided for interconnecting duct pieces in an engine exhaust system. The sealing joint is adapted to accommodate a female-to-female interconnection between duct pieces and it has a continuous circumferential construction. Accordingly, there are no inherent leak paths through which exhaust gas can escape upstream of emission-control devices (*e.g.*, catalytic converter, particle collector, etc.). The sealing joint of the present invention can provide improved sealing through increased contact load, improved wear resistance and simplified installation by incorporating an expand-in place "thermally activated" construction.

US-6109662 discloses a flexible joint for use with an underwater pipe such as might be installed on the ocean floor. Each of the ends of the pipe sections which are to be joined has a ball-shaped end. A convex-shaped ring with a spherical cross-section is fixed to the outside of the pipe end A hinged shell fits around the rings on the pipe ends which can be closed by means of eyebolts.

US-5772254 discloses a modular joint for a pair of conduits which makes use of a tubular sealing member and a pair of sealing assemblies. The sealing assemblies are connected at one end to the end of a conduit by welding and is open at its other end. The ends of the sealing assemblies are aligned to receive the sealing member in an interference fit. Each of the ends of the sealing member is shaped so as to provide a spherical portion.

The thermally activated sealing joint described and claimed herein offers the advantage of ease of installation in high temperature applications such as coupling diesel exhaust manifold sections. The sealing joint can be installed with a clearance fit, therefore requiring little to no installation force. In one embodiment, it derives this advantage through the novel use of a material with a high level of thermal expansion to generate a hydrostatic pressure. This pressure causes specific areas of the sealing joint to permanently expand and seal against the cavity into which it has been installed.

The present invention provides a thermally expandable sealing joint as defined in claim 1.

Examples of such precipitation hardening alloys include stainless steel commonly known as 17-7 PH, PH 15-7 Mo, PH 14-8 Mo, AM-350 and AM-355. The tubular body may include a wear-resistant coating on its outer surface.

Optionally, the sealing joint-includes a tubular body having a rigid inner sleeve and a flexible outer sleeve joined to the inner sleeve, the tubular body extending along a longitudinal axis and having a first end portion and a second end portion and a bridge portion extending between the first end portion and the second end portion; a first annular chamber between the inner and outer sleeves in the first end portion and a second annular chamber between the inner and outer sleeves in the second end portion; a thermally expandable material contained independently within the first annular chamber and the second annular chamber, wherein upon being heated within the chamber, the thermally expandable material expands to effect a radially outward, permanent deformation of the outer sleeve in the first end portion and the second end portion.

The rigid inner sleeve and flexible outer sleeve may each be formed of a metal or metal alloy. The metal or metal alloy of the inner sleeve may be the same as or different from the metal or metal alloy of the outer sleeve. In one embodiment, the thickness of the inner sleeve is greater than the thickness of the outer sleeve.

The thermally expandable material may be a liquid or a solid. For example, the liquid may be water or ethanol or a mixture thereof. The solid may be a metal or metal alloy. Alternatively, the thermally expandable material may include an ultra high molecular weight polyethylene or other polymeric material.

The invention also provides ductwork that includes a first duct piece, a second duct piece, and the sealing joint as provided by the invention which interconnects adjoining ends of the first duct piece and the second duct piece; wherein: the first duct piece includes a passage for conveying fluid gas and a female recess, coextensive with the passage, on its adjoining end; the second duct piece includes a passage for conveying combustion gas and a female recess, coextensive with the passage on its adjoining end; the first end portion of the tubular body is at least partially positioned within the female recess of the first duct piece; the second end portion of the tubular body is at least partially positioned with the female recess of the second duct piece; and the bridge portion of the tubular body extends across a gap between the adjoining ends of the duct pieces and/or is positioned partially within the female recesses.

The invention also provides engine exhaust system that includes the ductwork, wherein combustion gas passes through the passage in the first duct piece, through the passage in the tubular body of the sealing joint, and through the passage in the second duct piece.

Embodiments of the invention are described below by way of example with reference to the accompanying drawings, in which:

Figure 1 is a schematic drawing of an engine incorporating the sealing joint in its ductwork.
Figure 2 is a sectional view of a first embodiment of the sealing joint and the adjoining ends of the duct pieces interconnected thereby.
Figure 3 is a front axial view of the first embodiment of sealing joint isolated from the duct pieces.
Figure 4 is a sectional view of the sealing joint as taken along line 4-4 in Figure 3.
Figure 5 is a close-up view of the surface of the sealing joint of Figure 3.
Figures 6(a) and 6(b) are sectional views of an embodiment of the sealing joint having an expandable annular chamber before and after thermal expansion, respectively.
Figures 7(a) and 7(b) are sectional views of an embodiment of the sealing joint having an expandable annular channel before and after thermal expansion, respectively.

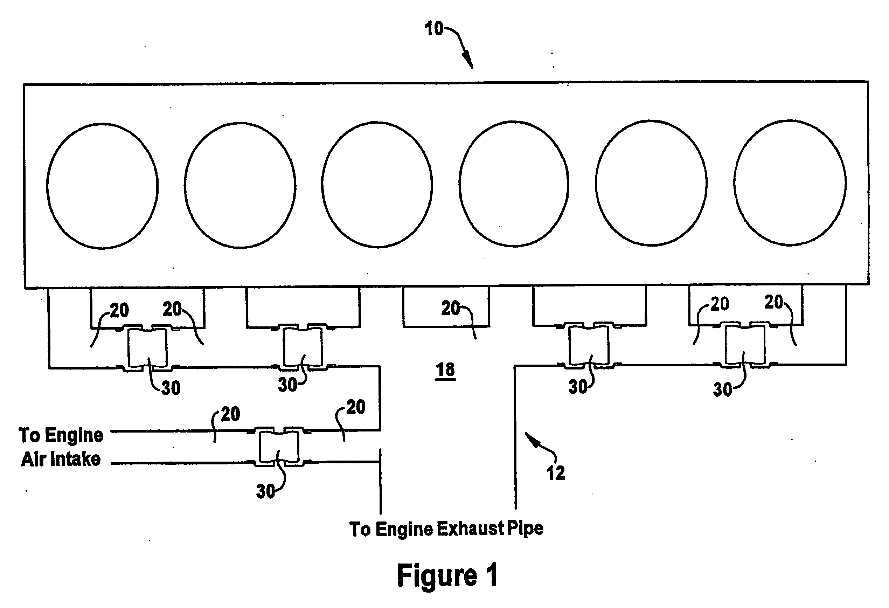

Referring to the drawings, Fig. 1 shows an exemplary engine 10 (*e.g.*, a six-cylinder diesel engine) which includes an exhaust system 12 comprising ductwork 18 witch a plurality of duct pieces 20 that are connected together to form conveyance passages for exhaust gasses. For example, a plurality of the duct pieces 20 can be interconnected to form an exhaust manifold head that discharges to an exit passage to convey exhaust combustion gas to a vehicle's exhaust pipe. If the engine 10 includes an EGR (*i.e.,* exhaust gas recirculation) design, certain duct pieces 20 can be interconnected to convey a portion of the exhaust gas back to the engine's air intake.

Adjoining duct pieces 20 in the engine exhaust system 12 are interconnected by sealing joints 30. The multi-piece construction of the ductwork, and the interconnection of the duct pieces 20 by the sealing joints 30, allows the exhaust system 12 to accommodate the thermal expansion-contraction that occurs during engine warm-up, operation, and/or cool-down. The sealing joints 30 compensate for movement of the duct pieces towards and away from each other during heating and cooling, without compromising any sealing capacity.

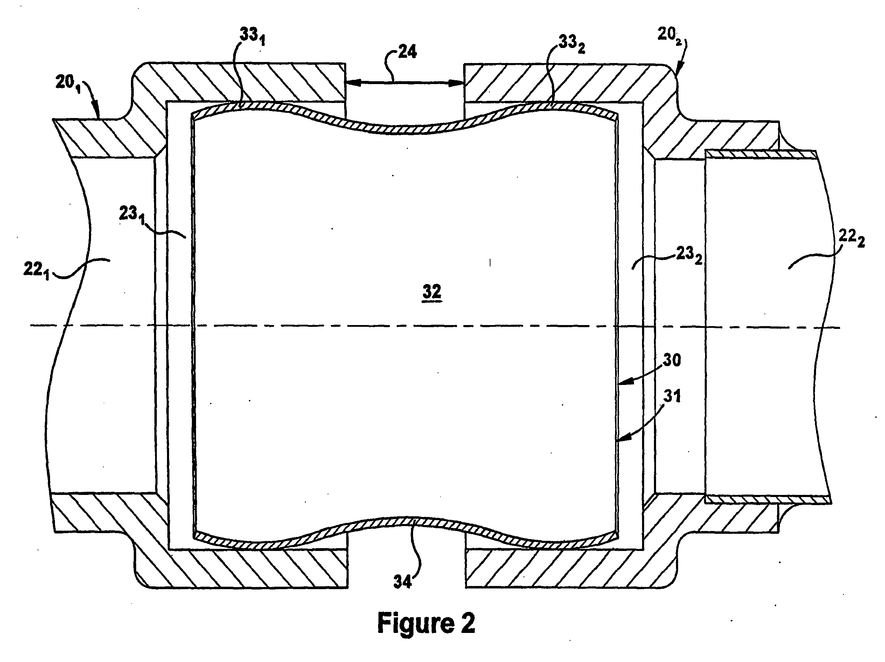

Figure 2 shows adjoining duct pieces 20 and their interconnecting sealing joint 30. The first duct piece $20_1$ includes a passage $22_1$ for conveying combustion gas and a female recess $23_1$, coextensive with the passage $22_1$, on its adjoining end. The second duct piece $20_2$, includes a passage $22_2$ for conveying combustion gas and a female recess $23_2$, coextensive with the passage $22_2$, on its adjoining end. The axial end faces of the adjoining duct pieces 20 create a female-to-female connection arrangement with the duct pieces 20 separated by a gap 24 that lengthens/shortens during thermal expansion/contraction of engine parts.

In one embodiment, the sealing joint 30 comprises a one-piece tubular body 31 having a passage 32 extending axially through it. The sealing joint 32 includes a first axial end portion $33_1$, a second axial end portion $33_2$ and a bridge portion 34 extending between them.. The first end portion $33_1$ is at least partially positioned within the female recess $23_1$ of the first duct piece $20_1$ and the second end portion $33_2$ is at least partially positioned with the female recess $23_2$ of the second duct piece $20_2$. The bridge portion 34 extends across the gap 24 and/or is positioned partially within female recesses $23_1$ and $23_2$, depending upon the engine's thermal conditions.

In the engine exhaust system 12, combustion gas passes through the passage $22_1$ of the first duct piece $20_1$, through the passage 32 in the sealing joint 30, and then through the passage $22_2$ of the second duct piece $20_2$. The sealing joint 30 does not have interruptions in its circumferential surfaces (as opposed to, for example, a sealing joint comprising a slip ring). Accordingly, there are no inherent leak paths through which exhaust gas can escape upstream of emission-control devices (*e.g.*, catalytic converter, particle collector, etc.).

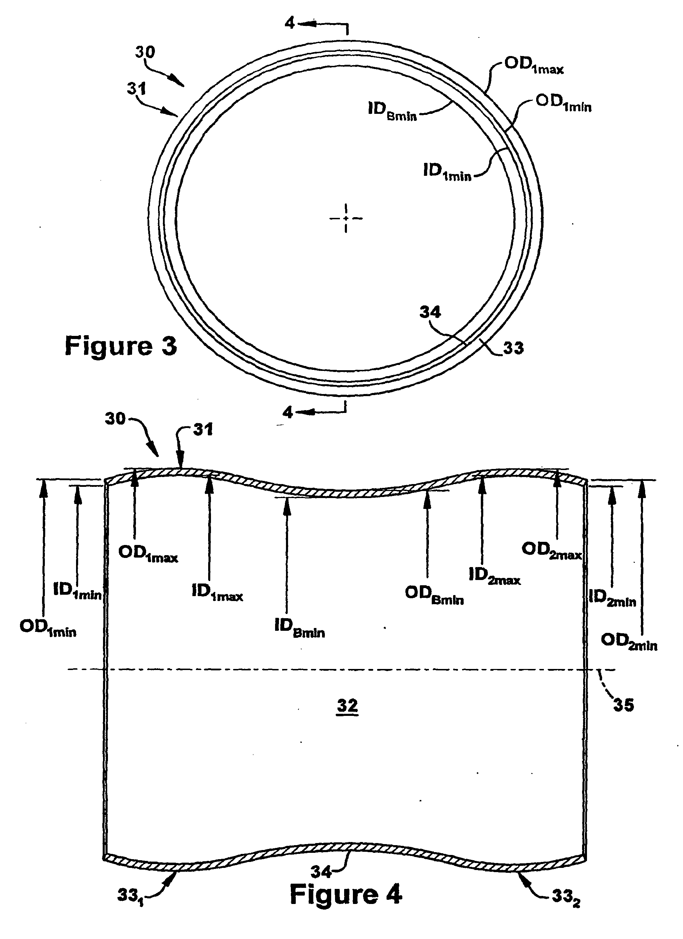

Figures 3 and 4 show the sealing joint 30 isolated from the engine's ductwork 18. The geometry of the tubular body 31 resembles a fat hourglass, with its end portions 33 corresponding to the upper/lower sand bulbs and its bridge portion 34 corresponding to the union between them (The bridge portion 34 is relatively wide when compared to the bottleneck of a conventional hourglass shape.)

The portions $33_1$, $33_2$, and 34 can be coaxially convex and/or concave. In other words, the tubular body 31 can be symmetrical about a series of planes passing through its longitudinal axis 35. An outer surface is "concave" or "convex" as viewed from outside the tubular body 31. An inner surface is "concave" or "convex" as viewed from inside the passage 32.

More particularly, the first end portion $33_1$ has a coaxially convex outer profile with a maximum outer diameter $OD_{1max}$ and a minimum outer diameter $OD_{1min}$, and it has a coaxially concave inner profile with a maximum inner diameter $ID_{1max}$ and a minimum inner diameter $ID_{1min}$. The second end portion $33_2$ has a coaxially convex outer profile with a maximum outer diameter $OD_{2max}$ and a minimum outer diameter $OD_{2min}$, and it has a coaxially concave inner profile with a maximum inner diameter $ID_{2max}$ and minimum inner diameter $ID_{2min}$. The bridge portion 34 has a coaxially concave outer profile with a minimum outer diameter $OD_{Bmin}$ and a coaxially convex inner profile with a minimum inner diameter $ID_{Bmin}$.

The bridge's minimum outer diameter $OD_{Bmin}$ is less than the maximum outer diameter $OD_{1max}$ of the first end portion $33_1$ and it is less than the maximum outer diameter $OD_{2max}$ of the second end portion $33_2$. The bridge's minimum inner diameter $ID_{Bmin}$ can be less than the maximum inner diameter $ID_{1max}$ of the first end portion $33_1$ and/or it can be less than the maximum inner diameter $ID_{2max}$ of the second end portion $33_2$.

Alternatively, the bridge's minimum inner diameter $ID_{Bmin}$ can be not less than the maximum inner diameter $ID_{1max}$ of the first end portion $33_1$ and/or it can be not less than the maximum inner diameter $ID_{2max}$ of the second end portion $33_2$.

The tubular body 31 can have a constant thickness throughout its portions $33_1$, $33_2$, 34. If so, the difference between the inner diameters and the difference between the outer diameters will be the substantially the same. In other words, for example, the inner-outer diameter differences ($OD_{1max} - ID_{1max}$ and $OD_{1min} - ID_{1min}$) of the first end portion $33_1$, the inner-outer diameter differences ($OD_{2max} - ID_{2max}$ and $OD_{2min} - ID_{2min}$) of the second end portion $33_2$, and the inner-outer diameter difference ($OD_{Bmin} - ID_{Bmin}$ of the bridge portion 34 can all be approximately equal.

The maximum outer diameters ($OD_{1max}$ and $OD_{2max}$) of the end portions 33 are each sized to contact the inner wall of the female recess 23 in the respective duct piece 20. (See Figure 2.) If the recess $23_1$ and the recess $23_2$ are of a similar shape, the end portions 33 can be symmetrical relative to each other about the bridge portion 34. Specifically, for example, the maximum outer diameter $OD_{1max}$ of the first end portion $33_1$ and the maximum outer diameter $OD_{2max}$ of the second end portion $33_2$ can be approximately equal. Likewise, the minimum outer diameter $OD_{1min}$ of the first end portion $33_1$ and the minimum outer diameter $OD_{2mm}$ of the second end portion $33_2$ can be approximately equal. And the inner diameters ($ID_{1max}$ and $ID_{1min}$) of the first end portion $33_1$ can be approximately equal to the inner diameters ($ID_{2max}$ and $ID_{2min}$) of the second end portion $33_2$.

In certain ductwork 18 (and/or with some duct pieces 20), the recess 23 and the recess $23_2$ may be of different sizes and/or shapes. If so, the end portions 33 of the sealing joint 30 can be adapted to accommodate the respective recesses 23. With non-similar duct pieces, the end portions 33 may not be symmetrical about the bridge portion 34. (But the portions $33_1$, $33_2$, and 34 can still be coaxially convex-concave and/or symmetrical about a series of planes passing through the longitudinal axis 35 of the tubular body 31).

The minimum outer diameter $OD_{1min}$ of the first end portion $33_1$ and the minimum outer diameter $OD_{2min}$ of the second end portion $33_2$ can be located near or at the portions' respective distal (*i.e.*, bridge-remote) edges. This geometry may facilitate insertion of the end portion 33 into the female recess 23 of the corresponding duct piece 20.

The tubular body 31 can be made from a metal and/or a metal alloy (*e.g.*, stainless steel, carbon steel, etc.). A cylindrical tube segment (*e.g.*, cut from seamed or seamless tubing) can be machined or cold-formed to acquire the desired hourglass shape. The thickness of the tubular body 31 can depend upon the material from which it is made and expected conditions in which it will be installed. If it is too thin, the body 31 may too easily deformed in the ductwork. If it is too thick, the body 31 may not be able adequately to accommodate axial shifting caused by thermal expansion-contraction. A metal stainless steel tubular body 31, intended for installation in the exhaust system of a typical diesel engine, can have a thickness of between about 0.5 mm and about 1.0 mm, for example.

The tubular body 31 of sealing joint 30 may be thermally expandable. In one embodiment, the metal alloy used to form the tubular body 31 is a precipitation hardening alloy. Precipitation hardening stainless steels contain an added amount of Al, Ti, Cu and/or Mo that forms fine precipitates upon heating the alloy. The formation of precipitates increases the strength of the alloy and results in an irreversible volume expansion of the alloy. There are three types of precipitation hardening stainless steels: martensitic type, austenitic type and semiaustenitic type. The thermally expandable tubular body of this embodiment is preferably made of a semiaustenitic precipitation hardening stainless steel. Examples of such stainless steels include those commonly referred to as 17-7 PH, PH 15-7 Mo, PH 14-8 Mo, AM-350 and AM-355. The compositions (wt%) of these semiaustenitic precipitation hardening stainless steels are shown in Table 1 below. With semiaustenitic precipitation hardening stainless steel, all or most of the structure remains austenitic even after the steel is cooled only by the solution heat treatment. This austenitic structure can be transformed to the martensitic structure by applying an intermediate heat treatment to the steel or by cold working, and the precipitation hardening is capable of being effected by applying a heat treatment to the steel.

Table 1

| Common Name (AISI No) | Fe | Cr | Ni | Mo | Al | Mn | Si | C | Other |
|---|---|---|---|---|---|---|---|---|---|
| 17-7 PH (Type 631) | Bal | 16.00 18.00 | 6.50 7.75 | - | 0.75 1.50 | 1.00 max | 1.00 max | 0.09 max | 0.04 max P; 0.04 max S |
| PH 15-7 Mo (Type 632) | Bal | 14.00 16.00 | 6.50 7.75 | 2.00 3.00 | 0.75 1.50 | 1.00 max | 1.00 max | 0.09 max | 0.04 max P; 0.03 max S |
| PH 14-8 Mo | Bal | 13.75 15.00 | 7.75 8.75 | 2.00 3.00 | 0.75 1.50 | 1.00 max | 1.00 max | 0.05 max | 0.015 max P; 0.010 max S |
| AM-350 (Type 633) | Bal | 16.00 17.00 | 4.00 5.00 | 2.50 3.25 | - | 0.50 1.25 | 0.50 max | 0.07 0.11 | 0.07-0.13 N; 0.04 max P; 0.03 max S |
| AM-355 (Type 634) | Bal | 15.00 16.00 | 4.00 5.00 | 2.50 3.25 | - | 0.50 1.25 | 0.50 max | 0.10 0.15 | 0.07-0.13 N; 0.04 max P; 0.03 max S |

The thermally expanding sealing joint offers the advantage of ease of installation in high temperature applications, such as coupling diesel exhaust manifold sections. The sealing joint can be installed with a clearance fit, therefore requiring little to no installation force. It derives this advantage through the novel use of the alloy's thermal expansion properties.

The precipitation hardening alloy sealing joint is in the annealed state during the installation. Once the engine is started, the sealing joint is subjected to hot exhaust gases which heat the sealing joint to a high temperature and change the alloy's structure. Precipitates are formed within the alloy that both harden the alloy and irreversibly expand its volume. Precipitation may result in a growth of about 0.004 mm per mm of diameter (0.004 inch per inch of diameter).

A minimum clearance of about 0.0076 mm (0.0003 inch) may be required between the sealing joint and the manifold in order to assemble the joint with ease. The material growth may be in excess of this minimum and allows the clearance to be considerably larger, while still effectively creating a seal. The extra clearance allows for manufacturing tolerances of both the sealing joint and the mating manifold sections.

The expansion of the sealing joint generates a relatively low level of load and is essentially limited to the size of the mating bore. This low load, along with the generous contact area, keeps the contact stresses low at the sealing surface, which helps minimize wear.

The sealing joint has a broader contact area on the sealing surface. This sealing surface also has no sharp edges and, thus is conducive to being coated with a wear resistant coating. The overall lower contact pressure, at the sealing surface, and the choice of coating, help prevent galling from the movements associated with thermal growth.

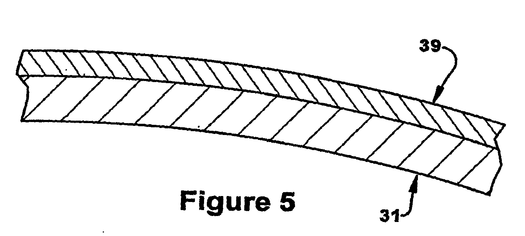

As illustrated in Figure 5, the tubular body 31 can include a wear-resistant coating 39 on its outer duct-contacting surface. The coating 39 can comprise a matrix phase including a metal or a metal alloy (*e.g.*, cobalt, nickel, tin, zinc, copper, iron, tungsten, or a combination of two or more thereof) and MCrAlY particles dispersed in the matrix (wherein M is chosen from nickel, cobalt, iron, or a combination of two or more thereof). The coating thickness can be at least about 25 $\mu$m The coating thickness can be up and including to about 130 $\mu$m. Further details of a suitable coating are disclosed in US-A-2009/0208775.

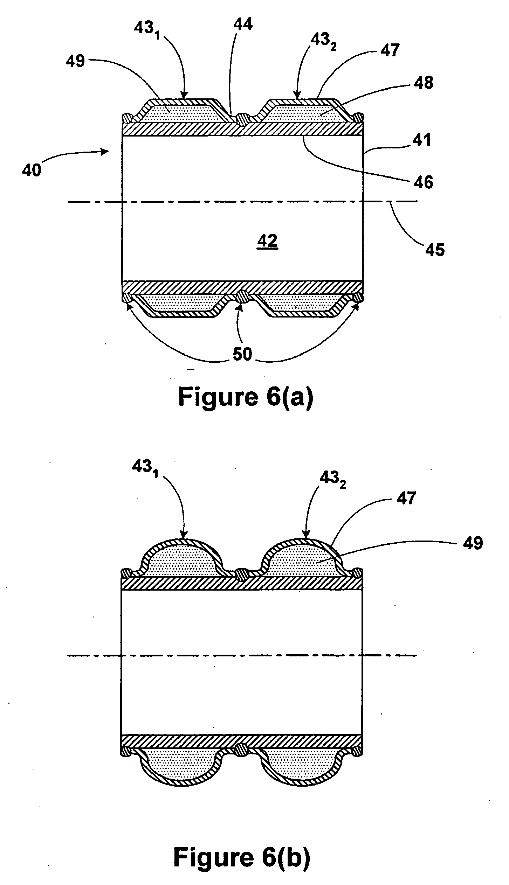

Figure 6(a) shows an embodiment of a thermally expandable sealing joint 40 prior to expansion. A tubular body 41 has an hourglass shape and includes passage 42 extending axially through it. The tubular body 41 includes an inner sleeve 46 having a cylindrical shape, and outer sleeve 47 configured to form an annular chamber 48 at each of the first end portion $43_1$ and at the second end portion $43_2$. Bridge portion 44 extends between the first end portion $43_1$ and the second end portion $43_2$. The outer sleeve 47 is joined to the inner sleeve 46 by attachments 50. Attachments 50 may be formed, for example, by welding, brazing or by mechanical attachment. Within each annular chamber 48 is contained a high thermal expansion material 49. The flexible outer sleeve 47 is constructed of a thinner gauge of material than the rigid inner sleeve 46, and is plastically deformable. The rigid inner sleeve 46 and flexible outer sleeve 47 may be made of a metal alloy, such as a stainless steel or a nickel alloy. The inner and outer sleeves may be made of the same alloy or different alloys.

The sealing joint 40 is positioned so that first end portion $43_1$ is a least partially within the female recess of the first duct piece, and the second end portion is at least partially within the recess of the second duct piece. (See the duct pieces 20 shown in Figure 2.) Once the engine is started, the sealing joint 40 is subjected to hot exhaust gases which heat the sealing joint to a high temperature and cause the high thermal expansion material 49 to expand. As shown in Figure 6(b), as the high thermal expansion material 49 expands, the thin flexible outer sleeve 47 is plastically deformed. Sealing joint 40 expands radially from axis 45 at both first end portion $43_1$ and second end portion $43_2$ to increase the diameter of the sealing joint and effect a seal within the recesses of the duct pieces. The increase in diameter that occurs is due to plastic deformation of the outer sleeve and is permanent. The increase in diameter of the sealing joint generates a relatively low level of load and is essentially limited to the size of the mating bore. This low load, along with the generous contact area, keeps the contact stresses low at the sealing surface, which helps to minimize wear.

In one embodiment, the annular chamber 48 is provided with a vent port to relieve the pressure within the chamber 48 and to prevent the outer sleeve 47 from rupturing. Alternatively or in addition, the deformable outer sleeve 47 is constructed so that it has sufficient thickness to prevent rupture, yet is capable of being plastically deformed.

The high thermal expansion material 49 within the annular chamber 48 may be solid or liquid. The temperature at which the material 49 expands is dependent upon the particular application in which the sealing joint is used. If the sealing joint is used in a relatively low temperature application, a material having a very high coefficient of thermal expansion (CTE) should be chosen. In an automotive exhaust application, an activation temperature, i.e., temperature for causing expansion of the sealing joint, as high as 600°C would be acceptable. The high thermal expansion material 49 within the chamber 48 may, or may not be vented to prevent excess pressure from causing damage through over-expansion of the outer sleeve 47. In one embodiment, the high thermal expansion material 49 is a solid material and the outer sleeve 47 includes a small pinhole for venting the contents of the chamber 48.

The CTE of the material 49 within the annular chamber 48 must exceed that of the material used for the rigid inner sleeve 46 and the flexible outer sleeve 47, and of the material used to construct the hardware, e.g., duct pieces, into which the sealing joint is positioned. For example, the inner and outer sleeves may be constructed of stainless steel with an estimated CTE of $17 \times 10^{-3}$ m/m·K or nickel alloy 718 with an estimated CTE of $12 \times 10^{-3}$ m/m·K. The hardware may be constructed of cast iron having an approximate CTE of $12 \times 10^{-3}$ m/m·K.

The CTE of suitable high thermal expansion materials may be expressed by the following equation:

$$\alpha_{min} = \alpha_1 + \frac{2.53 \times 10^{-6}}{T_a - 23}$$

where

$\alpha_{min}$ is the minimum required linear CTE of the high thermal expansion material in m/m·K;
$\alpha_1$ is the greater of the linear CTEs of the outer sleeve and the hardware; and
$T_a$ is the temperature (°C) at which the seal must activate.

In one embodiment, the criteria for determining whether an acceptable seal is formed is a minimum expansion of 0.00253 units per unit size interference. As an example, to meet the criteria, for a one inch diameter duct, the sealing joint must be capable of expanding to a minimum of 25.46 mm (1.00253 inch) to form an acceptable seal. For a two-inch diameter duct, the sealing joint must be capable of expanding to a minimum of 50.93 mm (2.0051 inch). By using a thermal expansion material having a CTE greater than $\alpha_{min}$, an even more robust seal can be obtained.

Examples of suitable liquid high thermal expansion materials include water, ethanol, and mixtures of water and ethanol. Due to the flammability of ethanol, mixtures of water and ethanol are preferred over the use of straight ethanol. Examples of suitable solid high thermal expansion materials include metals and metal alloys, and polymeric materials. Aluminium and magnesium and their alloys are particular examples of solid high CTE materials. Polyethylene is an example of a suitable polymeric material having a high CTE. An ultra high molecular weight polyethylene commercially available from Ticona under the trade name GUR is one example of a useful solid material.

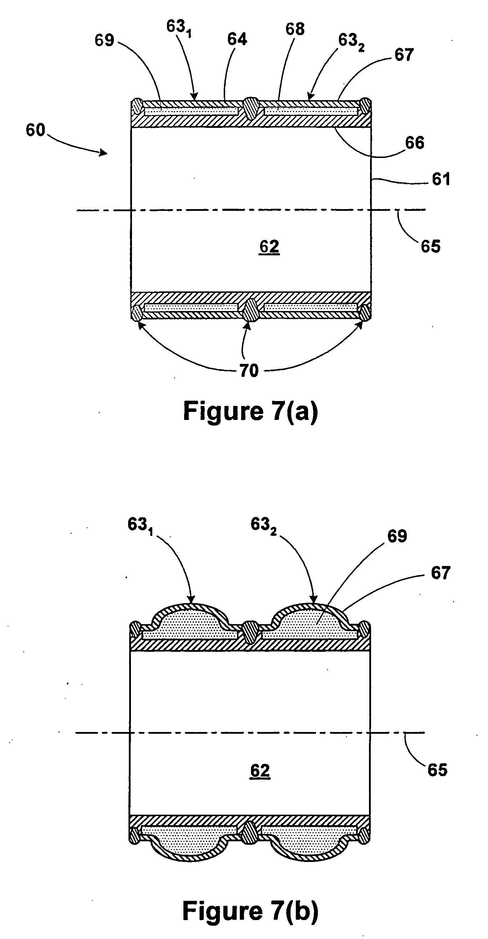

Figure 7(a) shows a further embodiment of a thermally expandable sealing joint prior to expansion. A tubular body 61 has a cylindrical shape and includes passage 62 extending axially through it. The tubular body 61 includes an inner sleeve 66 having a cylindrical shape, and outer sleeve 67 joined to inner sleeve 66. Annular channels 68 are formed in inner sleeve 66 at each of the first end portion 631 and at the second end portion 632. For example, annular channels 68 may be cut or machined into the outer surface of inner sleeve 66. Bridge portion 64 extends between the first end portion 631 and the second end portion 632. The outer sleeve 67 is joined to the inner sleeve 66 by attachments 70 at the bridge portion 64 between channels 68 and at each end portion 631 and 632 adjacent the outermost edge of the channels 68. Attachments 70 may be formed, for example, by welding, brazing or by mechanical attachment. Within each annular channel 68 is contained a high thermal expansion material 69. Outer sleeve 67 is constructed of a thinner gauge of material than inner sleeve 66.

The sealing joint 60 is positioned so that first end portion 631 is a least partially within the female recess of the first duct piece, and the second end portion is at least partially within the recess of the second duct piece. Thermal activation occurs when the sealing joint 60 is subjected to hot exhaust gases. As shown in Figure 7(b), as the high expansion material 69 expands, the thin flexible outer sleeve 67 is plastically deformed. Sealing joint 60 expands radially from axis 65 at both first end portion 631 and second end portion 632 so that sealing joint 60 assumes an hourglass shape to effect a seal within the recesses of the duct pieces. Deformation of the outer sleeve 67 is permanent.

In connection with the various functions performed by the above described elements (components, assemblies, devices, compositions, etc.), the terms (including a reference to a "means") used to describe such elements are intended to correspond, unless otherwise indicated, to any element which performs the specified function of the described element (i.e., that is functionally equivalent), even though not structurally equivalent to the disclosed structure which performs the function in the herein illustrated exemplary embodiment or embodiments of the invention. In addition, while a particular feature of the invention may have been described above with respect to only one or more of several illustrated embodiments, such feature may be combined with one or more other features of the other embodiments, as may be desired and advantageous for any given or particular application.

## Claims

1. A thermally expandable sealing joint (30) comprising a one-piece tubular body (31) having an outer surface;
the tubular body (31) having a first axial end portion $(33_1)$, a second axial end portion $(33_2)$, and a bridge portion (34) extending between them;
the first end portion $(33_1)$ having a coaxially convex outer profile with a maximum outer diameter $(OD_{1max})$;

the second end portion ($33_2$) having a coaxially convex outer profile with a maximum outer diameter ($OD_{2max}$); and the bridge portion (34) having a coaxially concave outer profile with a minimum outer diameter ($OD_{Bmin}$), this minimum outer diameter ($OD_{Bmin}$) being less than the maximum outer diameter ($OD_{1max}$) of the first end portion ($33_1$) and less than the maximum outer diameter ($OD_{2max}$) of the second end portion ($33_2$);

in which the tubular body comprising a precipitation hardening alloy so that the maximum outer diameter ($OD_{1max}$) of the first end portion ($33_1$) and the maximum outer diameter ($OD_{2max}$) of the second end portion ($33_2$) increase substantially irreversibly upon heating the sealing joint (30).

2. The sealing joint (30) of claim 1 in which the precipitation hardening alloy is a stainless steel selected from 17-7 PH, PH 15-7 Mo, PH 14-8 Mo, AM-350 and AM-355.

3. The sealing joint (30) of any one of the preceding claims in which the tubular body (31) includes a wear-resistant coating (39) on its outer surface.

4. The sealing joint (30) of claim 3 in which the wear-resistant coating (39) comprises:

   a matrix phase comprising a metal or metal alloy; and
   a reinforcing phase comprising particles of an alloy having the formula MCrAlY in which M is a metal or metal alloy, Cr is chromium, Al is aluminium and Y is yttrium.

5. Ductwork (18) comprising a first duct piece ($20_1$), a second duct piece ($20_2$), and the sealing joint (30) set forth in any one of the preceding claims interconnecting adjoining ends of the first duct piece ($20_1$) and the second duct piece ($20_2$), in which:

   the first duct piece ($20_1$) includes a passage ($22_1$) for conveying fluid gas and a female recess ($23_1$), coextensive with the passage, on its adjoining end;
   the second duct piece ($20_2$) includes a passage ($22_2$) for conveying combustion gas and a female recess ($23_2$), coextensive with the passage on its adjoining end;
   the first end portion ($33_1$) of the tubular body (31) is at least partially positioned within the female recess ($23_1$) of the first duct piece ($20_1$);
   the second end portion ($33_2$) of the tubular body (31) is at least partially positioned with the female recess ($23_2$) of the second duct piece ($20_2$); and
   the bridge portion (34) of the tubular body (31) extends across a gap (24) between the adjoining ends of the duct pieces ($20_1$, $20_2$) and/or is positioned partially within the female recesses ($23_1$, $23_2$).

6. An engine exhaust system comprising ductwork as claimed in claim 5, in which combustion gas passes through the passage in the first duct piece ($20_1$), through the passage ($22_1$) in the tubular body (31) of the sealing joint (30), and through the passage ($22_2$) in the second duct piece ($20_2$).

**Patentansprüche**

1. Thermisch dehnbare Dichtverbindung (30), die einen einstückigen, röhrenförmigen Körper (31) mit einer Außenfläche aufweist,

   wobei

   der röhrenförmige Körper (31) einen ersten axialen Endabschnitt ($33_1$), einen zweiten axialen Endabschnitt ($33_2$) und einen Brückenabschnitt (34) hat, welcher sich zwischen diesen erstreckt,

   der erste Endabschnitt ($33_1$) ein koaxial konvexes Außenprofil mit einem maximalen Außendurchmesser ($OD_{1max}$) hat,

   der zweite Endabschnitt ($33_2$) ein koaxial konvexes Außenprofil mit einem maximalen Außendurchmesser ($OD_{2max}$) hat, und

   der Brückenabschnitt (34) ein koaxial konkaves Außenprofil mit einem minimalen Außendurchmesser ($OD_{Bmin}$) hat, wobei dieser minimale Außendurchmesser ($OD_{Bmin}$) kleiner als der maximale Außendurchmesser ($OB_{1max}$) des ersten Endabschnitts ($33_1$) und kleiner als der maximale Außendurchmesser ($OD_{2max}$) des zweiten Endabschnitts ($33_2$) ist;

   bei welcher der röhrenförmige Körper eine ausscheidungshärtbare Legierung aufweist, so dass sich der maximale Außendurchmesser ($OD_{1max}$) des ersten Endabschnitts ($33_1$) und der maximale Außendurchmesser ($OD_{2max}$) des zweiten Endabschnitts ($33_2$) auf ein Erwärmen der Dichtverbindung (30) hin im Wesentlichen irreversibel vergrößern.

**2.** Dichtverbindung (30) nach Anspruch 1, bei welcher die ausscheidungshärtbare Legierung ein rostfreier Stahl ist, der aus folgenden ausgewählt wurde: 17-7 PH, PH 15-7 Mo, PH 14-8 Mo, AM-350 und AM-355.

**3.** Dichtverbindung (30) nach einem der vorhergehenden Ansprüche, bei welcher der röhrenförmige Körper (31) eine verschleißbeständige Beschichtung (39) auf seiner Außenfläche umfasst.

**4.** Dichtverbindung (30) nach Anspruch 3, bei der die verschleißbeständige Beschichtung (39) aufweist:

eine Matrixphase, die ein Metall oder eine Metalllegierung aufweist; und
eine Armierungsphase, die eine Legierung mit der Formel MCrAlY aufweist, in welcher M ein Metall oder eine Metalllegierung, Cr Chrom, Al Aluminium und Y Yttrium ist.

**5.** Rohrwerk (18), das ein erstes Rohrstück ($20_1$), ein zweites Rohrstück ($20_2$) und die Dichtverbindung (30) nach einem der vorhergehenden Ansprüche aufweist, welche Verbindungsenden des ersten Rohrstücks ($20_1$) und des zweiten Rohrstücks ($20_2$) miteinander verbindet, bei dem:

das erste Rohrstück ($20_1$) einen Durchgang ($22_1$) zum Fördern von Fluidgas und gleichlaufend mit dem Durchgang an dessen Verbindungsende eine Aufnahme-Ausnehmung ($23_1$) umfasst;
das zweite Rohrstück ($20_2$) einen Durchgang ($22_2$) zum Fördern von Abgas und gleichlaufend mit dem Durchgang an dessen Verbindungsende eine Aufnahme-Ausnehmung ($23_2$) umfasst;
der erste Endabschnitt ($33_1$) des röhrenförmigen Körpers (31) zumindest teilweise innerhalb der Aufnahme-Ausnehmung ($23_1$) des ersten Rohrstücks ($20_1$) angeordnet ist;
der zweite Endabschnitt ($33_2$) des röhrenförmigen Körpers (31) zumindest teilweise in der Aufnahme-Ausnehmung ($23_2$) des zweiten Rohrstücks ($20_2$) angeordnet ist; und
der Brückenabschnitt (34) des röhrenförmigen Körpers (31) sich über einen Spalt (24) zwischen den benachbarten Enden der Rohrstücke ($20_1$, $20_2$) erstreckt und/oder teilweise innerhalb der Aufnahme-Ausnehmungen ($23_1$, $23_2$) angeordnet ist.

**6.** Motorabgasanlage, die ein Rohrwerk nach Anspruch 5 aufweist, bei welchem Abgas durch den Durchgang in dem ersten Rohrstück ($20_1$), durch den Durchgang ($22_1$) in dem röhrenförmigen Körper (31) der Dichtverbindung (30) und durch den Durchgang ($22_2$) in dem zweiten Rohrstück ($20_2$) hindurchtritt.

**Revendications**

**1.** Joint d'étanchéité thermiquement expansible (30) comprenant un corps tubulaire d'un seul tenant (31) ayant une surface externe ;
le corps tubulaire (31) ayant une première partie d'extrémité axiale ($33_1$), une deuxième partie d'extrémité axiale ($33_2$) et une partie formant pont (34) s'étendant entre elles ;
la première partie d'extrémité ($33_1$) ayant un profil externe coaxialement convexe avec un diamètre externe maximum ($OD_{1max}$) ;
la deuxième partie d'extrémité ($33_2$) ayant un profil externe coaxialement convexe avec un diamètre externe maximum ($OD_{2max}$) ; et
la partie formant pont (34) ayant un profil externe coaxialement concave avec un diamètre externe minimum ($OD_{Bmin}$), ce diamètre externe minimum ($OD_{Bmin}$) étant inférieur au diamètre externe maximum ($OD_{1max}$) de ia première partie d'extrémité ($33_1$) et inférieur au diamètre externe maximum ($OD_{2max}$) de la deuxième partie d'extrémité ($33_2$) ;
dans lequel le corps tubulaire comprend un alliage à durcissement par précipitation de sorte que le diamètre externe maximum ($OD_{1max}$) de la première partie d'extrémité ($33_1$) et le diamètre externe maximum ($OD_{2max}$) de la deuxième partie d'extrémité ($33_2$) augmentent sensiblement de manière irréversible suite au chauffage du joint d'étanchéité (30).

**2.** Joint d'étanchéité (30) selon la revendication 1, dans lequel l'alliage à durcissement par précipitation est un acier inoxydable choisi parmi 17-7 PH, PH 15-7 Mo, PH 14-8 Mo, AM-350 et AM-355.

**3.** Joint d'étanchéité (30) selon l'une quelconque des revendications précédentes, dans lequel le corps tubulaire (31) comprend un revêtement résistant à l'usure (39) sur sa surface externe.

**4.** Joint d'étanchéité (30) selon la revendication 3, dans lequel le revêtement résistant à l'usure (39) comprend :

une phase matricielle comprenant un métal ou un alliage de métal ; et

une phase de renforcement comprenant des particules d'un alliage ayant la formule MCrAlY dans laquelle M est un métal ou un alliage de métal, Cr est le chrome, Al est l'aluminium et Y est l'yttrium.

5. Conduite (18) comprenant une première pièce de conduit ($20_1$), une deuxième pièce de conduit ($20_2$), et le joint d'étanchéité (30) selon l'une quelconque des revendications précédentes, interconnectant les extrémités attenantes de la première pièce de conduit ($20_1$) et de la deuxième pièce de conduit ($20_2$), dans laquelle :

la première pièce de conduit ($20_1$) comprend un passage ($22_1$) pour transporter du gaz fluide et un évidement femelle ($23_1$), coextensif avec le passage, sur son extrémité attenante ;

la deuxième pièce de conduit ($20_2$) comprend un passage ($22_2$) pour transporter des gaz de combustion et un évidement femelle ($23_2$), coextensif avec le passage sur son extrémité attenante ;

la première partie d'extrémité ($33_1$) du corps tubulaire (31) est au moins partiellement positionnée à l'intérieur de l'évidement femelle ($23_1$) de la première pièce de conduit ($20_1$) ;

la deuxième partie d'extrémité ($33_2$) du corps tubulaire (31) est au moins partiellement positionnée à l'intérieur de l'évidement femelle ($23_2$) de la deuxième pièce de conduit ($20_2$) ; et

la partie formant pont (34) du corps tubulaire (31) s'étend sur un espace (24) situé entre les extrémités attenantes des pièces de conduit ($20_1$, $20_2$) et/ou est positionnée partiellement à l'intérieur des évidements femelles ($23_1$, $23_2$).

6. Système d'échappement de moteur comprenant une conduite selon la revendication 5, dans lequel le gaz de combustion passe par le passage dans la première pièce de conduit ($20_1$), par le passage ($22_1$) dans le corps tubulaire (31) du joint d'étanchéité (30) et par le passage ($22_2$) dans la deuxième pièce de conduit ($20_2$).

Figure 1

**Figure 2**

Figure 3

Figure 4

**Figure 5**

39

31

**Figure 6(a)**

**Figure 6(b)**

**Figure 7(a)**

**Figure 7(b)**

**EP 2 273 175 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6109662 A
- US 5772254 A
- US 20090208775 A